# EUROPEAN PATENT APPLICATION

(11) **EP 3 473 084 A1**
(43) Date of publication of application: **24.04.2019**
(21) Application number: 18167992.9
(22) Date of filing: 18.04.2018
(51) Int. Cl.: A01G 25/09

(54) **IRRIGATION APPARATUS FOR CULTURING ORGANIC VEGETABLES**

(30) Priority: 18.10.2017 CN 201721342105 U
(71) Applicant: Linyi Jigang Agricultural Technology Co., Ltd., 277700 Linyi City, Shandong (CN)
(72) Inventor: JI, Jinggang, Linyi City, Shandong 277700 (CN); JI, Feng, Linyi City, Shandong 277700 (CN); GUI, Lihua, Linyi City, Shandong 277700 (CN); LIU, Bangli, Linyi City, Shandong 277700 (CN)
(74) Representative: Vitina, Maruta

(57) **Abstract**

The invention discloses an irrigation apparatus for culturing organic vegetables, comprising a base, a regulating rod and an irrigation part. The regulating rod is fixed to one end of the base. One end of the regulating rod is connected with a rotating shaft through a bearing. One end of the rotating shaft is fixed with a secondary gear and a roller. A water storage tank is fixed to one end on the base. One end of the water storage tank is bolted with a water pump. A water outlet end of the water pump is connected with an irrigation pipe. A servo motor is fixed to one end on the base. An output end of the servo motor is fixed with a first gear. The first gear is engaged with a second gear. The second gear is fixed with the rotating shaft. Both ends of the rotating shaft are fixedly connected with a primary gear. The primary gear is connected with a driven gear through a chain. The driven gear is fixedly connected with the rotating shaft of a front wheel through a key pin. In the invention, the height of the base is regulated through the regulating rod, and the roller is arranged on a bottom end of the regulating rod, thereby realizing movable and uniform irrigation of large area of organic vegetables. Irrigation mode is more flexible and efficient.

## Description

### TECHNICAL FIELD

The invention relates to the technical field of crop planting, and particularly relates to an irrigation apparatus for culturing organic vegetables.

### BACKGROUND

Organic vegetables refer to vegetable products certified by the organic food certification authority and awarded with the organic food certificate, and are obtained strictly according to the organic production regulation in the production process of the vegetables by prohibiting the use of any chemical substance such as synthetic pesticide, fertilizer and growth regulator as well as genetically engineered organisms and products, following the natural law and the ecology principle, using a series of sustainable agricultural technologies, coordinating planting balance and maintaining the sustainable and stable agricultural ecosystem. With the improvement of human living standard, the organic vegetables receive increasing attention and become more and more popular. At present, the irrigation of the organic vegetables is mainly realized by manual irrigation or paving irrigation nozzles, which has the following defects: 1. The manual irrigation needs to consume a lot of labor force; the irrigation amount is subjective, which is easy to generate a phenomenon of uneven irrigation; and mechanization degree is low; thus, the manual irrigation is not suitable for the irrigation of large area of organic vegetables; 2. the culture of the organic vegetables belongs to precision agriculture and includes crop rotation, intercropping and all kinds of planting; the mode of paving the irrigation nozzles needs to pave water pipes in a large area, thereby causing higher cost, inconvenient maintenance and fixed irrigation area; the irrigation range of the nozzles is mainly circular; and a superposing effect of a plurality of nozzles still generates the phenomenon of uneven irrigation.

### SUMMARY

The purpose of the invention is to propose an irrigation apparatus for culturing organic vegetables in order to solve disadvantages in the prior art.

To achieve the above purpose, the invention adopts the following technical solution:
An irrigation apparatus for culturing organic vegetables comprises a base, a regulating rod and an irrigation part, wherein the regulating rod is vertically bolted and fixed to one end of the base; one end of the regulating rod away from the base is welded and fixed with an outer ring of the bearing; an inner ring of the bearing is fixedly connected with a rotating shaft through a key pin; one end of the rotating shaft is fixedly connected with a secondary gear and a roller successively through key pins; the roller is divided into a front roller and a rear roller; the front roller and the rear roller are connected through a chain; an irrigation part is arranged on one end on the base; the irrigation part comprises a water storage tank, a water pump and an irrigation pipe; the water storage tank is bolted and fixed to the base; the water pump is bolted and fixed to one end of the water storage tank; a water inlet end of the water pump is connected with a bottom of the water storage tank through a water pipe; a water outlet end of the water pump is connected with the irrigation pipe through the water pipe; the irrigation pipe is fixed to an outer surface of the water storage tank through a pipe clamp; a servo motor is bolted and fixed to one end on the base; an output end of the servo motor is fixedly connected with a first gear through a key pin; the first gear is engaged with a second gear; the second gear is fixed with the rotating shaft through a key pin; both ends of the rotating shaft are fixedly connected with a primary gear through key pins; the primary gear is connected with a driven gear through a chain; the driven gear is fixedly connected with the rotating shaft of a front wheel through a key pin; and
the regulating rod comprises a first connecting rod, a second connecting rod and a spring; a groove is formed in a top of the first connecting rod; a bottom of the second connecting rod is inserted into the groove of the first connecting rod; the bottom of the second connecting rod is welded and fixed with the spring; and one end of the spring is welded and fixed with an inner wall of a bottom surface of the first connecting rod.

Preferably, through holes are formed in surfaces of the first connecting rod and the second connecting rod; a limiting screw is inserted on the first connecting rod; and the limiting screw successively penetrates through the first connecting rod and the second connecting rod.

Preferably, the irrigation pipe is perpendicular to the regulating rod.

Preferably, a plurality of nozzles are uniformly arranged on the surface of the irrigation pipe.

Preferably, an observation window is arranged on a side wall of the water storage tank.

Preferably, a plurality of conical convex blocks are uniformly arranged on the roller n a direction perpendicular to a circumferential tangent.

The invention has beneficial effects that:
1. In the invention, the roller is fixed through the regulating rod below the base; in the process that the apparatus moves at constant speed, the water pump sprays water in the water storage tank through the nozzles, thereby realizing movable irrigation of the organic vegetables; and compared with manual irrigation, the invention saves labor force and is suitable for irrigating large area of organic vegetables.
2. In the invention, a plurality of nozzles are uniformly arranged on the surface of the irrigation pipe; compared with paving irrigation, the invention does not need to pave a water pipe in advance and is more flexible in irrigation mode; and the base is connected with the roller through the regulating rod, so that the height can be regulated according to the height of the organic vegetables and the cost is lower.

### DESCRIPTION OF DRAWINGS

Fig. 1 is a main view of an irrigation apparatus for culturing organic vegetables proposed in the invention;
Fig. 2 is a left view of an irrigation apparatus for culturing organic vegetables proposed in the invention;
Fig. 3 is a right view of an irrigation apparatus for culturing organic vegetables proposed in the invention;
Fig. 4 is a structural schematic diagram of a regulating rod of an irrigation apparatus for culturing organic vegetables proposed in the invention; and
Fig. 5 is an AA' sectional view of an irrigation apparatus for culturing organic vegetables proposed in the invention.

In the figures: 1 base; 2 regulating rod; 21 first connecting rod; 22 second connecting rod; 23 spring; 24 through hole; 25 limiting screw; 3 irrigation part; 4 bearing; 5 secondary gear; 6 roller; 61 front roller; 62 rear roller; 63 conical convex block; 7 water storage tank; 8 water pump; 9 irrigation pipe; 10 servo motor; 11 first gear; 12 second gear; 13 rotating shaft; 14 primary gear; 15 nozzle; and 16 driven gear.

### DETAILED DESCRIPTION

Technical solutions of embodiments of the invention will be clearly and fully described below in combination with drawings in embodiments of the invention. Apparently, described embodiments are merely some embodiments of the invention, not all of the embodiments.

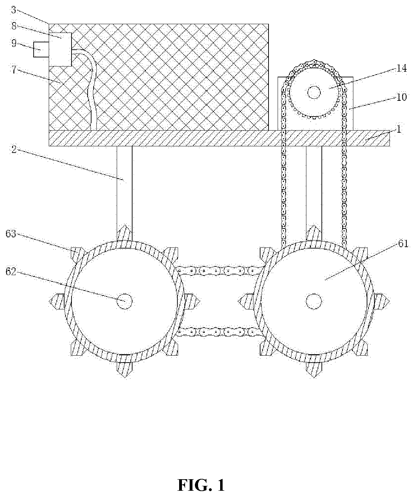

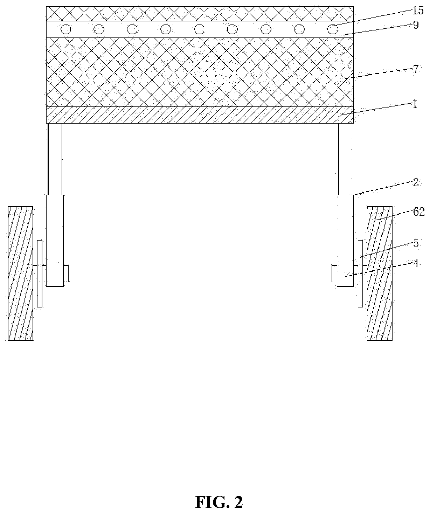

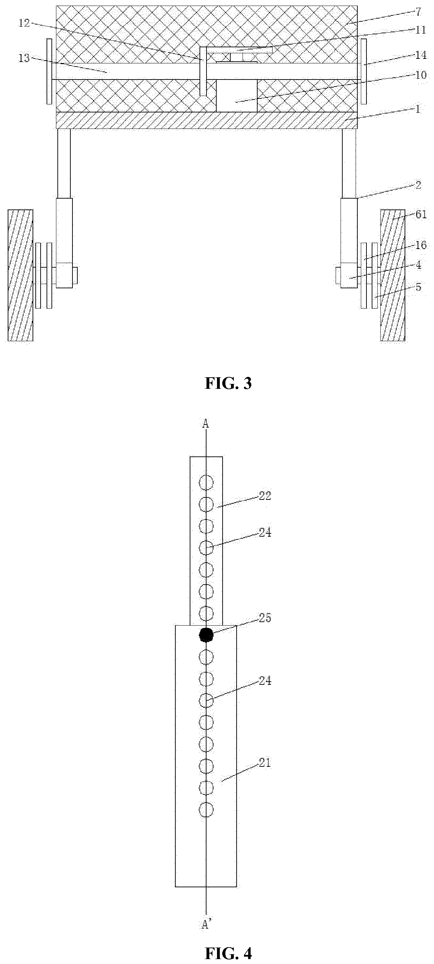

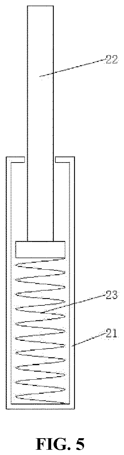

With reference to Figs. 1-5, an irrigation apparatus for culturing organic vegetables comprises a base 1, a regulating rod 2 and an irrigation part 3, wherein the regulating rod 2 is vertically bolted and fixed to one end of the base 1; one end of the regulating rod 2 away from the base 1 is welded and fixed with an outer ring of the bearing 4; an inner ring of the bearing 4 is fixedly connected with a rotating shaft through a key pin; one end of the rotating shaft is fixedly connected with a secondary gear 5 and a roller 6 successively through key pins; the roller 6 is divided into a front roller 61 and a rear roller 62; the front roller 61 and the rear roller 62 are connected through a chain; a plurality of conical convex blocks 63 are uniformly arranged on the roller 6 in a direction perpendicular to a circumferential tangent, to facilitate rotation of the roller 6 in a muddy field; an irrigation part 3 is arranged on one end on the base 1; the irrigation part 3 comprises a water storage tank 7, a water pump 8 and an irrigation pipe 9; the water storage tank 7 is bolted and fixed to the base 1; an observation window is arranged on a side wall of the water storage tank 7, which is convenient for viewing water quantity in the water storage tank 7; the water pump 8 is bolted and fixed to one end of the water storage tank 7; a water inlet end of the water pump 8 is connected with a bottom of the water storage tank 7 through a water pipe; a water outlet end of the water pump 8 is connected with the irrigation pipe 9 through the water pipe; the irrigation pipe 9 is fixed to an outer surface of the water storage tank 7 through a pipe clamp; the irrigation pipe 9 is perpendicular to the regulating rod 2; a plurality of nozzles 15 are uniformly arranged on the surface of the irrigation pipe 9 for irrigating the organic vegetables more uniformly; a servo motor 10 is bolted and fixed to one end on the base 1; an output end of the servo motor 10 is fixedly connected with a first gear 11 through a key pin; the first gear 11 is engaged with a second gear 12; the second gear 12 is fixed with the rotating shaft 13 through a key pin; both ends of the rotating shaft 13 are fixedly connected with a primary gear 14 through key pins; the primary gear 14 is connected with a driven gear 16 through a chain; the driven gear 16 is fixedly connected with the rotating shaft of a front wheel 61 through a key pin; the regulating rod 2 comprises a first connecting rod 21, a second connecting rod 22 and a spring 23; a groove is formed in a top of the first connecting rod 21; a bottom of the second connecting rod 22 is inserted into the groove of the first connecting rod 21; the bottom of the second connecting rod 22 is welded and fixed with the spring 23; and one end of the spring 23 is welded and fixed with an inner wall of a bottom surface of the first connecting rod 21. Through holes 24 are formed in surfaces of the first connecting rod 21 and the second connecting rod 22; a limiting screw 25 is inserted on the first connecting rod 21; and the limiting screw 25 successively penetrates through the first connecting rod 21 and the second connecting rod 22. A distance between the first connecting rod 21 and the second connecting rod 22 can be regulated through the limiting screw 25, so as to regulate the height of the regulating rod 2 and avoid pressing the organic vegetables due to too low base 1. In the invention, the roller 6 is fixed through the regulating rod 2 below the base; in the process that the apparatus moves at constant speed, the water pump 8 sprays water in the water storage tank 7 through the nozzles 15, thereby realizing movable irrigation of the organic vegetables; and compared with manual irrigation, the invention saves labor force and is suitable for irrigating large area of organic vegetables. In the invention, a plurality of nozzles 15 are uniformly arranged on the surface of the irrigation pipe 9; compared with paving irrigation, the invention does not need to pave a water pipe in advance and is more flexible in irrigation mode; and the base 1 is connected with the roller 6 through the regulating rod 2, so that the height can be regulated according to the height of the organic vegetables and the cost is lower.

### Working Principle

In the invention, the limiting screw 25 is firstly screwed off, and the distance between the first connecting rod 21 and the second connecting rod 22 can be regulated and fixed according to the height of the organic vegetables to be irrigated, so as to regulate the height of the regulating rod 2. Then, the water is injected into the water storage tank 7; the servo motor 10 is started; the servo motor 10 drives the first gear 11 to rotate; the first gear 11 is engaged with the second gear 12; the second gear 12 is fixed with the rotating shaft 13; and primary gears 14 are fixed to both ends of the rotating shaft 13. Therefore, the servo motor 10 transfers power to the primary gears 14; the primary gears 14 are connected with the driven gear 16 through a chain; secondary gears 5 of the front wheel 61 and the rear wheel 62 are connected through a chain so that the front wheel 61 and the rear wheel 62 rotate synchronously. The apparatus is moved to a to-be-irrigated region; the water pump 8 is started; and the water pump 8 delivers the water in the water storage tank 7 into the irrigation pipe 9 and sprays out the water through the nozzles 15. In the travelling process of the apparatus, the nozzles 15 synchronously spray the water and conduct irrigation, thereby achieving the purpose of uniform irrigation.

The above only describes preferred specific embodiments of the invention, but the protection scope of the invention is not limited to this. Equivalent replacements or changes made by those skilled in the art according to the technical solution of the invention and the inventive concept within the technical scope disclosed by the invention shall be included in the protection scope of the invention.

## Claims

1. An irrigation apparatus for culturing organic vegetables, comprising a base (1), a regulating rod (2) and an irrigation part (3), wherein the regulating rod (2) is vertically bolted and fixed to one end of the base (1); one end of the regulating rod (2) away from the base (1) is welded and fixed with an outer ring of the bearing (4); an inner ring of the bearing (4) is fixedly connected with a rotating shaft through a key pin; one end of the rotating shaft is fixedly connected with a secondary gear (5) and a roller (6) successively through key pins; the roller (6) is divided into a front roller (61) and a rear roller (62); the front roller (61) and the rear roller (62) are connected through a chain; an irrigation part (3) is arranged on one end on the base (1); the irrigation part (3) comprises a water storage tank (7), a water pump (8) and an irrigation pipe (9); the water storage tank (7) is bolted and fixed to the base (1); the water pump (8) is bolted and fixed to one end of the water storage tank (7); a water inlet end of the water pump (8) is connected with a bottom of the water storage tank (7) through a water pipe; a water outlet end of the water pump (8) is connected with the irrigation pipe (9) through the water pipe; the irrigation pipe (9) is fixed to an outer surface of the water storage tank (7) through a pipe clamp; a servo motor (10) is bolted and fixed to one end on the base (1); an output end of the servo motor (10) is fixedly connected with a first gear (11) through a key pin; the first gear (11) is engaged with a second gear (12); the second gear (12) is fixed with the rotating shaft (13) through a key pin; both ends of the rotating shaft (13) are fixedly connected with a primary gear (14) through key pins; the primary gear (14) is connected with a driven gear (16) through a chain; the driven gear (16) is fixedly connected with the rotating shaft of a front wheel (61) through a key pin; and
the regulating rod (2) comprises a first connecting rod (21), a second connecting rod (22) and a spring (23); a groove is formed in a top of the first connecting rod (21); a bottom of the second connecting rod (22) is inserted into the groove of the first connecting rod (21); the bottom of the second connecting rod (22) is welded and fixed with the spring (23); and one end of the spring (23) is welded and fixed with an inner wall of a bottom surface of the first connecting rod (21).

2. The irrigation apparatus for culturing organic vegetables according to claim 1, wherein through holes (24) are formed in surfaces of the first connecting rod (21) and the second connecting rod (22); a limiting screw (25) is inserted on the first connecting rod (21); and the limiting screw (25) successively penetrates through the first connecting rod (21) and the second connecting rod (22).

3. The irrigation apparatus for culturing organic vegetables according to claim 1, wherein the irrigation pipe (9) is perpendicular to the regulating rod (2).

4. The irrigation apparatus for culturing organic vegetables according to claim 1, wherein a plurality of nozzles (15) are uniformly arranged on the surface of the irrigation pipe (9).

5. The irrigation apparatus for culturing organic vegetables according to claim 1, wherein an observation window is arranged on a side wall of the water storage tank (7).

6. The irrigation apparatus for culturing organic vegetables according to claim 1, wherein a plurality of conical convex blocks (63) are uniformly arranged on the roller (6) in a direction perpendicular to a circumferential tangent.
